# EUROPEAN PATENT SPECIFICATION

(11) **EP 2 654 025 B1**
(45) Date of publication and mention of the grant of the patent: **07.06.2017**
(21) Application number: 12002676.0
(22) Date of filing: 17.04.2012
(51) Int. Cl.: G08B 25/01, G08B 29/18

(54) **Mounting location of automatic in-vehicle emergency call device.**
Montageort eines automatischen Notrufgerätes im Fahrzeug
Lieu de montage d'un dispositif d'appel d'urgence automatique dans un véhicule

(43) Date of publication of application: 23.10.2013
(73) Proprietor: Harman Becker Automotive Systems GmbH, 76307 Karlsbad (DE)
(72) Inventor: Gerdes, Thomas, 89081 Ulm (DE)
(74) Representative: Grünecker Patent- und Rechtsanwälte PartG mbB

(56) References cited:
- DE-A1-102005 021 115
- DE-A1-102009 012 628
- DE-A1-102009 056 233
- JP-A- 2006 270 564
- US-A1- 2002 037 707

## Description

### Field of Invention

The present invention relates to automatic in-vehicle emergency call techniques. In particular, the present invention relates to a secure electrical connection of a device for transmitting an emergency call in case of a car accident.

### Background of the Invention

Vehicles, for example, automobiles can nowadays be equipped with electronic safety systems that automatically call emergency services in the case of a serious car accident. Even if a driver is unconscious, the system can automatically inform rescue workers of the exact location of a crash site such that an ambulance, for example, can immediately be informed on the accident. In-vehicle call emergency services save lives and reduce the severity of injuries. As soon as an automatic emergency call device installed in the vehicle car senses a severe impact in an accident, it will automatically call the nearest emergency centre and transmits the exact geographic location of the accident scene and other data. Usually, the installed emergency call device is also configured to allow for manual operation by a witness to an accident by pushing a button, for example. Whether the call is made manually or automatically, there is usually built up a voice connection between the vehicle and the emergency call centre in addition to the automatic data link. Thus, any car occupant capable of answering questions can provide the call centre with additional details of the accident.

Getting an immediate alert in the event of an accident and knowing the exact location of the crash site can cut emergency services response time by 50% in rural and 40% in urban areas. Thanks to this gain in time, lives can be saved and the severity of injuries can be mitigated. Furthermore, all injured will be treated faster, thereby giving accident victims better recovery prospects. Quicker arrival at the accident scene will also allow faster clearance of crash sites, thus reducing the risk of secondary accidents and decreasing congestion times.

In Europe, for example, the so-called "eCall service" has been initiated by the European Commission. In the event of a collision, the intended solution can automatically or manually establish an emergency voice call (E112) via the cellular network to the local emergency agencies, i.e., the Public-Safety Answering Point (PSAP). Besides enabling two-way speech communication between the motorist and the PSAP operator, eCall also allows transfer of a data message, for example, an SMS message, from the in-vehicle emergency call device over the cellular network to the PSAP which is denoted as eCall Minimum Set of Data (MSD). The MSD includes vehicle location information, time stamp, number of passengers, vehicle identification number and other relevant information. The data of the vehicle location and travelling direction at the time of the accident is obtained from satellite positioning (Global Positioning System, GPS). As part of the eSafety initiative, ETSI MSG and the 3rd Generation Partnership Project (3GPP) standardized the eCall service.

In the art the in-vehicle emergency call devices are electrically powered by the main battery of the vehicle. In case of an accident, however, the power supply cable connecting the main battery and the emergency call device can get broken thereby disabling operation of the emergency call device. Thus, according to an alternative approach some kinds of emergency call devices are provided with their own back-up batteries. This approach, however, suffers from a risk that the back-up battery is not functioning properly and, in additions, raises costs for the emergency call equipment. The document US 2002/0037707 addresses the problem of enhancing the reliability of an automotive emergency call system by reducing the risk of signal interconnections being cut off in an accident.

Thus, there is a need for the realization of reliable in-vehicle emergency call services without the need for the provision of back-up batteries.

### Description of the Invention

The present invention addresses the above-mentioned need and provides mounting means configured for mounting an automotive emergency call control unit installed in a vehicle in close proximity to a starter battery installed in the vehicle and
an automotive emergency call system, comprising
a starter battery;
an emergency call control unit electrically connected to the starter battery; and
mounting means for mounting the emergency call control unit in close proximity to the starter battery.

The automotive emergency call system may, particularly, be installed in an automobile or motor bike. In particular, the automotive emergency call system does not include any back-up battery for supplying electric power to the emergency call control unit but operation of the emergency call control unit rather depends solely on the power supply provided by the starter battery (main battery) of the vehicle wherein the automotive emergency call system is installed.

According to the invention, the emergency call control unit is located in close proximity to the starter battery in order to reduce the risk that the electrical connection of the emergency call control unit to the battery is broken in case of an accident. The term "close proximity" denotes a distance between the battery and the emergency call control unit of less than 1 meter, in particular, less than 0.5 meter, more particularly, less than 0.1 m, where the distance is measured from a side surface of the battery to an adjacent side surface of the emergency call control unit or from a top surface of the battery to a bottom surface of the emergency call control unit. Power supply cable connections between the battery and the emergency call control unit may have lengths of less than 1 meter, 0.5 meter, less than 0.2 meter or less than 0.1 meter. Contrary, in the art the starter battery is located in the trunk compartment or the engine compartment of an automobile and the emergency call control unit is located somewhere else. Thus, conventionally long power supply cables connecting the starter battery and the emergency call control unit are necessary and such long cables can easily be broken in severe crashes.

It should be noted that the mounting means can be configured not only for mounting the emergency call control unit but also for mounting the starter battery. The mounting means, thus, facilitates the mounting of the starter battery and the emergency call control unit in close proximity to each other. The mounting means may comprise moveable tracks or a telescopic structure (telescopic slide-out) on which the emergency call control unit can be mounted. Depending on the actual site of mounting the emergency call control unit and the battery the tracks can appropriately be adjusted, Moreover, the mounting means may comprise channels for housing the power supply cables that are electrically connecting the starter battery and the emergency call control unit. The channels further protect the cables against breaking.

According to an embodiment, the automotive emergency call system comprises a substrate, for example, some plate, and the starter battery and the emergency call control unit are provided on the (same) substrate.

The automotive emergency call system may further comprise sensors configured to detect the triggering of an airbag, intense deceleration, vehicle roll-over and/or sudden temperature increase within a vehicle and to send signals to the emergency call control unit is case of a detected triggering of an airbag, intense deceleration, vehicle roll-over and/or sudden temperature increase within a vehicle. In response to the respective signals received from the sensors the emergency call control unit initiates transmission of an emergency call, for example, in the context to the eCall service. In particular, the emergency call control unit may comprise connection means to car interfaces allowing for the transmission of an emergency call. The emergency call may be transmitted in form of an SMS or in-band over a voice channel including a Minimum Data Set comprising vehicle location information received by a GPS, time stamp, number of passengers, vehicle identification number.

The present invention, moreover, provides a vehicle comprising the automotive emergency call system according to one of the above-described examples, wherein the automotive emergency call system is installed in a passenger compartment, engine compartment or trunk compartment. The vehicle is equipped with GPS and a transmission means.

Additional features and advantages of the present invention will be described with reference to the drawings. In the description, reference is made to the accompanying figure that is meant to illustrate an embodiment of the invention. It is understood that such an embodiment does not represent the full scope of the invention.
Figure 1 illustrates operation of an exemplary automotive emergency call system.
Figure 2 illustrates an automotive emergency call system according to an example of the present invention.
Figure 3 illustrates a mounting means for mounting an emergency call control unit to a starter battery.

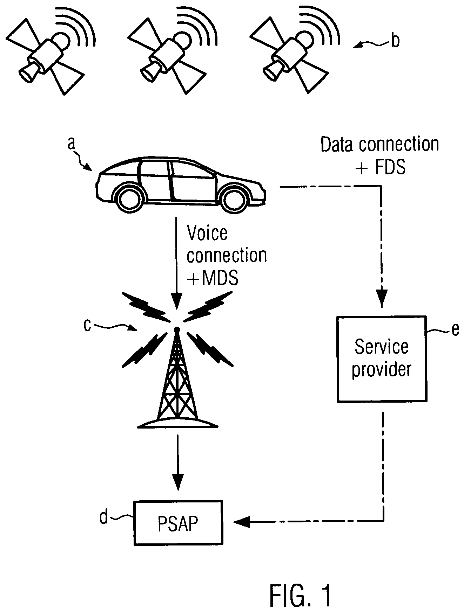

The present invention relates to an automotive emergency call system. Operation of an example of such a system is illustrated in Figure 1. Consider a situation where an automobile 1 is involved in an accident. The automobile a is equipped with GPS for communication with satellites b allowing for satellite positioning. The automobile a is alsoi equipped with an emergency call control unit that initiates a voice connection a transmission of a Minimum Data Set (MDS) via a network c.

The MDS is transmitted in-band over a voice channel to a PSAP d via the network c. In addition, a data connection for transmission of a Full Data Set (FDS) is established via a service provider e. Whereas the MDS provides information on place, time and type of the accident using GSM (Global System for Mobile Communications) built-in procedures, more extensive information about the vehicle, for example, that may be complemented with additional information from a data base by the service provider e are transmitted to the PSAP d in form of an FDS. The FDS may be in the XML format and may be transmitted by a vehicle terminal over an IP network (GPRS) using the HTTP POST method.

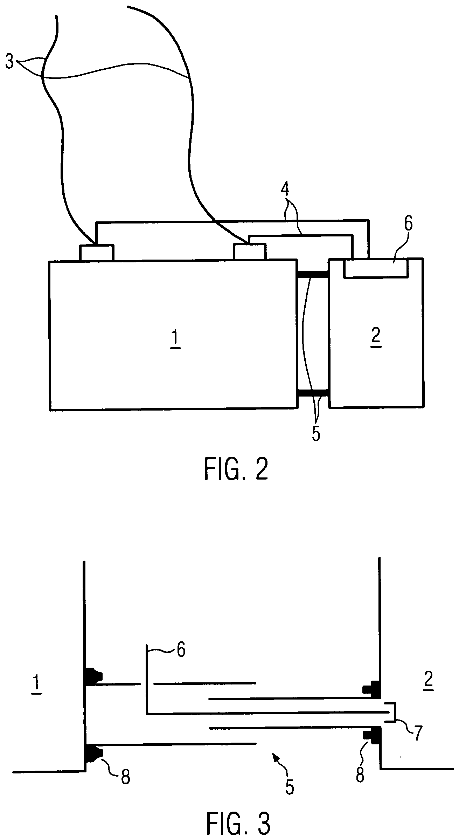

It is crucial for the above-described operation that an emergency call control unit installed in the automobile a is operating, in particular, supplied with electrical power by a battery. In the present invention, no back-up battery is provided for empowering the emergency call control unit but energy supply to the same solely relies on a starter battery. An example for an automotive emergency call system is shown in Figure 2. A starter battery 1 is regarded being part of the system. According to the invention, an emergency call control unit 2 is installed in close proximity to the starter battery 1. In fact, the emergency call control unit 2 may be located as close to the starter battery 1 as possible. Whereas in Figure 2 the emergency call control unit 2 is located aside of the starter battery 1, in principle, it could also be located above the starter battery 1.

The starter battery 1 supplies a plurality of components of a vehicle, for example, an automobile, with electric power via power supply cables 3. The starter battery 1 supplies the emergency call control unit 2 with electric power via short power supply cables 4. Due to the close proximity of the starter battery 1 and the emergency call control unit 2 the cable lengths for empowering the emergency call control unit 2 can be chosen to be less than some 10 centimeters, for example, less than 0.5 meter or less than 0.2 meter or less than 0.1 meter. Contrary, in conventional automotive emergency call systems long distances between a starter battery and an emergency call control unit have to be bridged by relatively long power supply cables that can easily break in accidents whereby the emergency call control unit cannot work properly.

Figure 2, furthermore, shows mounting means 5 for mounting the emergency call control unit 2 close to the starter battery 1. The mounting means 5 may mechanically connect the emergency call control unit 2 and the starter battery 1. Moreover, the mounting means 5 may be configured for mounting both the emergency call control unit 2 and the starter battery 1. In principle, mounting can be performed by means of screws and/or bolts. The emergency call control unit 2 may be mounted on movable guiding tracks of the mounting means 5.

As shown in Figure 2 the emergency call control unit 2 comprises a system connection means 6 for communication with vehicle interfaces. Via the system connection means 6 transmission of an emergency call can be initiated. On the other hand, the emergency call control unit 2 can be informed about an accident over the system connection means 6 by sensors detecting triggering of an airbag, intense deceleration, vehicle roll-over and/or sudden temperature increase within a vehicle.

Figure 3 illustrates an example for a mounting means 5 for mounting an emergency call control unit to a starter battery. The shown mounting means 5 comprises a telescopic structure for adjustment of the distance between the emergency call control unit 2 that is positioned in close proximity to the starter battery 1. In the shown example and different from the embodiment illustrated in Figure 2 a power supply cable 6 is housed in a channel of the telescopic structure of the mounting means 5. In the emergency call control unit 2 a socket 7 is provided for electrical connection to the power supply cable 6.

The telescopic structure of the mounting means 5 is attached to the starter battery 1 and the emergency call control unit 2 by fastening means 8 that may comprises screws or bolts. In this example, the telescopic structure of the mounting means 5 not only allows for appropriate adjusting the distance between the starter battery 1 and the emergency call control unit 2 but also houses a power supply cable 6 thereby providing protection of a secure electrical connection of the emergency call control unit 2 to the starter battery 1 even in the case of a heavy crash.

## Claims

1. Automotive emergency call system, comprising
a starter battery;
an emergency call control unit electrically connected to the starter battery;
a mounting means configured for mounting an automotive emergency call control unit in close proximity to the starter battery; and
power supply cables connecting the starter battery and the emergency call control unit and wherein the lengths of the power supply cables are less than 0.2 meter.

2. The automotive emergency call system according to claim 1, wherein the mounting means is configured for mounting the starter battery.

3. The automotive emergency call system according to claim 4, wherein the mounting system comprises channels for housing the power supply cables.

4. The automotive emergency call system according to claim 2 or 3, further comprising a substrate and wherein the starter battery and the emergency call control unit are provided on the substrate.

5. The automotive emergency call system according to one of the claims 2 to 4, further comprising sensors configured to detect the triggering of an airbag, intense deceleration, vehicle roll-over and/or sudden temperature increase within a vehicle and to send signals to the emergency call control unit is case of a detected triggering of an airbag, intense deceleration, vehicle roll-over and/or sudden temperature increase.

6. The automotive emergency call system according to one of the claims 2 to 5, wherein the emergency call control unit comprises connection means to car interfaces allowing for the transmission of an emergency call.

7. Vehicle comprising the automotive emergency call system according to one of the claims 2 to 6, wherein the automotive emergency call system is installed in a passenger compartment, engine compartment or trunk compartment.

## Patentansprüche

1. Automobilnotrufsystem, umfassend
eine Starterbatterie;
eine Notrufsteuereinheit, die elektronisch mit der Starterbatterie verbunden ist;
ein Befestigungsmittel, dazu ausgelegt, um eine Automobilnotrufsteuereinheit in unmittelbarer Nähe zu der Starterbatterie zu befestigen; und
Stromversorgungskabel, die die Starterbatterie und die Notrufsteuereinheit verbinden und wobei die Längen der Stromversorgungskabel geringer sind als 0,2 Meter.

2. Automobilnotrufsystem nach Anspruch 1, wobei das Befestigungsmittel dazu ausgelegt ist, die Starterbatterie zu befestigen.

3. Automobilnotrufsystem nach Anspruch 4, wobei das Befestigungssystem Kanäle umfasst, um die Stromversorgungskabel aufzunehmen.

4. Automobilnotrufsystem nach Anspruch 2 oder 3, ferner umfassend ein Substrat und wobei die Starterbatterie und die Notrufsteuereinheit auf dem Substrat angeordnet sind.

5. Automobilnotrufsystem nach einem der Ansprüche 2 bis 4, ferner umfassend Sensoren, dazu ausgelegt, das Auslösen eines Airbags, intensive Verzögerung, Fahrzeugüberschlag und/oder plötzlichen Temperaturanstieg in einem Fahrzeug zu erfassen und im Fall eines erfassten Auslösens eines Airbags, intensiver Verzögerung, Fahrzeugüberschlags und/oder plötzlichen Temperaturanstiegs Signale an die Notrufsteuereinheit zu senden.

6. Automobilnotrufsystem nach einem der Ansprüche 2 bis 5, wobei die Notrufsteuereinheit Verbindungsmittel zu Autoschnittstellen umfasst, die die Übertragung eines Notrufs ermöglichen.

7. Fahrzeug umfassend das Automobilnotrufsystem nach einem der Ansprüche 2 bis 6, wobei das Automobilnotrufsystem in einem Fahrgastraum, Motorraum oder Kofferraum installiert ist.

## Revendications

1. Système d'appel d'urgence d'automobile, comprenant :
une batterie de démarrage ;
une unité de commande d'appel d'urgence reliée électriquement à la batterie de démarrage ;
un moyen de montage configuré pour monter une unité de commande d'appel d'urgence d'automobile à proximité immédiate de la batterie de démarrage ; et
des câbles d'alimentation électrique reliant la batterie de démarrage et l'unité de commande d'appel d'urgence, et dans lequel les longueurs des câbles d'alimentation électrique sont inférieures à 0,2 mètre.

2. Système d'appel d'urgence d'automobile selon la revendication 1, dans lequel le moyen de montage est configuré pour monter la batterie de démarrage.

3. Système d'appel d'urgence d'automobile selon la revendication 4, dans lequel le système de montage comprend des canaux pour loger les câbles d'alimentation électrique.

4. Système d'appel d'urgence d'automobile selon la revendication 2 ou 3, comprenant en outre un substrat et dans lequel la batterie de démarrage et l'unité de commande d'appel d'urgence sont fournies sur le substrat.

5. Système d'appel d'urgence d'automobile selon l'une quelconque des revendications 2 à 4, comprenant en outre des capteurs configurés pour détecter le déclenchement d'un sac gonflable, la décélération intense, le renversement de véhicule et/ou l'augmentation soudaine de température dans un véhicule et pour envoyer des signaux à l'unité de commande d'appel d'urgence en cas de déclenchement détecté d'un sac gonflable, de décélération intense, de renversement de véhicule et/ou d'augmentation soudaine de température.

6. Système d'appel d'urgence d'automobile selon l'une quelconque des revendications 2 à 5, dans lequel l'unité de commande d'appel d'urgence comprend un moyen de connexion aux interfaces de voiture permettant la transmission d'un appel d'urgence.

7. Véhicule comprenant le système d'appel d'urgence d'automobile selon l'une quelconque des revendications 2 à 6, dans lequel le système d'appel d'urgence d'automobile est installé dans un compartiment de passager, un compartiment de moteur ou un compartiment de coffre.
